# EUROPEAN PATENT SPECIFICATION

(11) **EP 2 393 374 B1**
(45) Date of publication and mention of the grant of the patent: **17.04.2013**
(21) Application number: 10703664.2
(22) Date of filing: 03.02.2010
(51) Int. Cl.: A23G 1/00, A23G 1/56

(54) **PROCESS FOR PREPARING CHOCOLATE CRUMB**
VERFAHREN ZUR HERSTELLUNG VON SCHOKOLADENKRUMEN
PROCED DE PRPARATION DE MIE DE CHOCOLAT

(30) Priority: 04.02.2009 GB 0901819
(43) Date of publication of application: 14.12.2011
(73) Proprietor: Cadbury Holdings Limited, Uxbridge, Middlesex UB8 1DH (GB)
(72) Inventor: GODFREY, Graham, Worcestershire WR15 8JF (GB); KEOGH, Andrew Joseph, Deepdene, Victoria 3103 (AU); JACKSON, Graham Maudslay, Warwickshire B49 5QU (GB); CHILVER, Ian, West Midlands B30 2LU (GB)
(74) Representative: Ward, David Ian
(86) International application number: PCT/GB2010/000173
(87) International publication number: WO 2010/089534

(56) References cited:
- EP-A1- 0 248 462
- WO-A1-91/07099
- WO-A1-94/24883
- GB-A- 2 437 415
- US-A- 4 084 011
- US-A- 4 267 703
- US-A- 5 080 923
- US-A- 5 591 474
- US-A1- 2001 012 536
- US-B1- 6 309 689
- MINIFIE B W: "The manufacture of crumb milk chocolate and other methods of incorporation of milk in chocolate" MANUFACTURING CONFECTIONER, MANUFACTURING CONFECTIONER PUBLISHING COMPANY, US, vol. 54, no. 4, 1 April 1974 (1974-04-01), pages 19-26, XP008122403 ISSN: 0025-2573
- BOWMAN-TIMMERMANS M ET AL: "CHOCOLATE CRUMB-DAIRY INGREDIENT FOR MILK CHOCOLATE" MANUFACTURING CONFECTIONER, CHICAGO, IL, US, 1 June 1995 (1995-06-01), pages 74-79, XP008019653 ISSN: 0163-4364
- DE KONING K: "Milchschokolade-Crumb und Blokmilk" ZUCKER- UND SUESSWAREN WIRTSCHAFT, BECKMANN, LEHRTE, DE, vol. 45, no. 10, 1 January 1992 (1992-01-01), pages 368-370, XP008122406 ISSN: 0373-0204
- LEES R: "MILK PRODUCTS AND CHOCOLATE CRUMB. \PART 3 - USING MILK CRUMB IN MANUFACTURE" CONFECTIONERY PRODUCTION, SPECIALISED PUBLICATIONS LTD., SURREY, GB, vol. 56, no. 12, 1 December 1990 (1990-12-01), page 842,860, XP000168167 ISSN: 0010-5473

## Description

### Technical Field of the Invention

The present invention relates to a process for chocolate crumb manufacture. In particular, the present invention relates to a process for the manufacture of chocolate crumb whereby the drying parameters employed result in superior flavour and texture development.

### Background to the Invention

The use of chocolate crumb in the manufacture of milk chocolate is well known in the chocolate industry. In particular, the low water content, and the presence of sugar and cocoa (which contains antioxidants) ensure that chocolate crumb has a far greater shelf life than the fresh milk from which it is made. This in turn removes the need for final chocolate production to take place at a location with plentiful access to milk.

However, it can be difficult to achieve an efficient production process giving consistent quality and taste of crumb. A key feature of crumb production is the Maillard reaction between proteins (present in milk and cocoa), water and reducing sugars (such as lactose, present in milk), which is responsible for the generation of caramel flavours in the crumb. Overexposure to conditions which promote this reaction (such as prolonged heat and moisture) will lead to the crumb having an unwanted flavour profile, and so must be avoided.

Generally speaking, the manufacture of crumb involves a number of steps comprising mixing the ingredients and processing the mixture under certain conditions so as to produce the crumb product. One of the most critical stages of the production of crumb is the "phase change" stage - whereby the mass of the material is converted from a "doughy" paste to a powder by sucrose or sugar crystallisation. The right conditions and parameters are essential for the phase change to occur in the correct manner and even slight variations can result in problems associated with inappropriate fat expression in the crumb and the texture of the crumb being too powdery resulting to an inferior crumb and fouling of the crumb processing equipment.

US2001/012536 describes a process in which chocolate crumb is prepared in a high shear mixer. The ingredients are mixed and heated to 90°C, reacted at the same temperature and then dried at 70°C for 90 minutes to reduce the moisture content below 1%. The crumb is then processed into chocolate.

The Manufacturing Confectioner "Chocolate crumb-dairy ingredient for milk chocolate", Bowman-Timmennans M. et. al., describes various crumb making processes. In the section headed "Crushing and storage" on p26 reference is made to the crumb being stored after drying. Such storage would be effected at ambient temperature.

It is an object of the present invention to provide a process for producing chocolate crumb having an improved flavour and texture profile.

### Summary of the Invention

In accordance with a first embodiment of the invention, there is provided a process for preparing chocolate crumb comprising:
a) providing a milk and sugar mixture or mixing together, milk and sugar so as to form a mixture;
b) evaporating liquid from the mixture;
c) adding cocoa mass/liquor to the mixture during and/or after steps (a) and/or (b);
d) subjecting the mixture to conditions effective to bring about sugar crystallisation in the mixture;
e) drying the mixture at a temperature in the range of 50 to 95°C for 35 to 200 minutes so as to form chocolate crumb; and
f) cooling the chocolate crumb by subjecting it to a temperature which is between 29°C and the drying temperature for 20 to 1000 minutes.

The invention provides a process in which the drying and cooling stage takes place at lower temperatures and for longer periods of time than prior art processes. It has been advantageously found that drying and cooling within these parameters result in a chocolate crumb with superior flavour and texture profiles.

Step (e) may comprise drying the mixture to a temperature in the range of 50°C to 90°C, 55°C to 95°C, 60°C to 90°C, 65°C to 85°C, 70°C to 80°C or any intermediate range thereof. Step (e) may last for 45 to 200 minutes, or 60 to 200 minutes. It will be understood that for 45 to 200 minutes means from 45 to no more than 200 minutes. A reduced drying time is advantageous for commercial and environmental reasons since it increases the capacity of the plant and the efficiency of the process.

Step (f) may last for 20 to 200 minutes, 20 to 120 minutes or 20 to 60 minutes.

After step (e), the chocolate crumb may have a moisture content in the range of 0.5 to 7%, 0.8% to 2%. 0.5% to 2%, 1% to 2% or 0.8% to 1.3%. The chocolate crumb may have a moisture content of no more than 7%, 5%, 3% or 2%. The chocolate crumb may have a moisture content of at least 0.1 %, 0.3 or 0.5%.

Steps (e) and/or (f) may further comprise subjecting mixture and/or chocolate crumb to a lowered pressure. A "lowered pressure", will be one which is lower than the pressure commonly regarded as normal atmospheric pressure (101.325 kPa). The mixture in step (e) may be subjected to a lower pressure than the chocolate crumb in step (f). The mixture in step (e) may be subjected to a pressure in the range of 3.5 to 20 kPa or 5 to 20kPa. The chocolate crumb in step (f) may be subjected to a pressure in the range of 3.5 to 100 kPa. In one embodiment the chocolate crumb is maintained at normal atmospheric pressure.

Step (b) may comprise evaporation of liquid from the mixture. Step (b) may comprise subjecting the mixture to heat. Step (b) may additionally comprise subjecting the mixture to a lowed pressure. The mixture may be subjected to heat and/or a lowered pressure between steps (b) and (c) and/or between steps (c) and (d).

It will be apparent that the process could be employed for producing chocolate crumb from powdered milk, liquid milk, or a mixture thereof. Step (a) may further comprise the addition of water. If powdered milk is used in the process, it may be mixing with water initially. If the milk is liquid milk, it may comprise concentrated liquid milk. If desired, the process may further comprise adding milk solids, prior to undertaking step (d).

At least steps (a) to (d) may be undertaken in a single reaction vessel. If desired, all the steps of (a) to (f) are undertaken in a single reaction vessel. Alternatively, at least one of steps (a) to (d) may be undertaken in different reaction vessels.

The process may further comprise the step of adding a fat to the mixture before or during step (e). The fat may be cocoa butter, butterfat, a cocoa butter equivalent (CBE), a cocoa butter substitute (CBS), a vegetable fat that is liquid at standard ambient temperature and pressure (SATP, 25°C and 100kPa) or any combination of the above. CBEs are defined in Directive 2000/36/EC. Suitable CBEs include illipe, Borneo tallow, tengkawang, palm oil, sal, shea, kokum gurgi and mango kernel. CBE's may be used in combination with cocoa butter. The addition of fat to the mixture will result in increasing the overall fat content of the crumb and assisting in the drying step. It will also be evident that increasing the fat content may be desirable so that the chocolate confectionery produced with the crumb will have an increased mouth feel and desirable melt characteristics.

The process may further comprise the step of:
g) forming the chocolate crumb into briquettes. Briquettes, allow the crumb to be handled and transported with ease. Of course, other ways of reducing the size of the crumb into manageable pieces, may also be apparent to the skilled addressee.

### Detailed Description of the Invention

A specific embodiment of the present invention will now be described, by way of example only, with reference to the accompanying drawings, in which:
Figure 1 shows a cut-away diagram of the apparatus used in accordance with the present invention; and
Figure 2 shows a schematic flow diagram illustrating the various steps used in the process of the present invention.

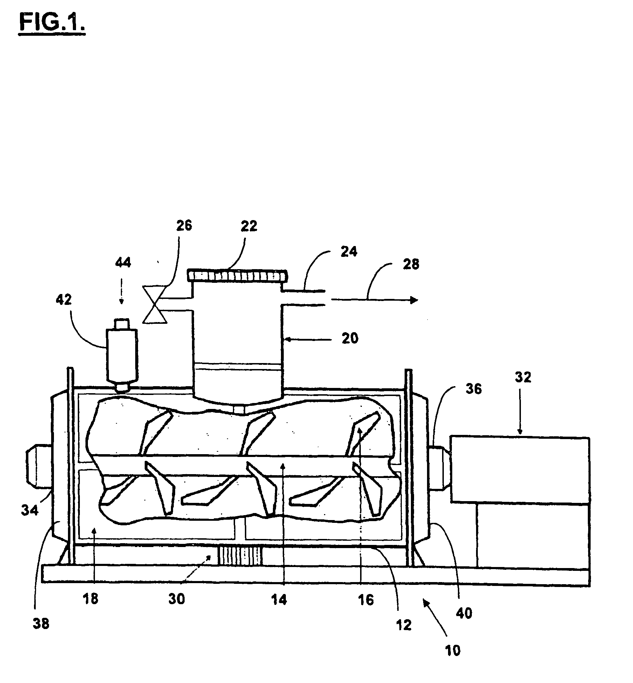

With reference to Figure 1, there is shown a reactor 10 briefly comprising a generally cylindrical reaction vessel 12 having a single horizontal shaft 14 which is rotatable through the centre of the vessel. A number of agitator paddles 16, extend outwardly from the shaft 14, to a position close to the interior surface of the vessel 12 so that when the shaft rotates, the paddles run close to the interior surface and sweeps across the whole inner surface of the vessel. The exterior surface of the vessel 12 is covered by a number of jackets 18 which are divided into different sections, through which fluids can flow so as to heat and cool the vessel during operation.

The vessel 12 has a condensation tower 20 extending vertically upright from a central location in the vessel. The tower 20 is formed from a large cylindrical extension which is of a diameter approximately 1/4 the size of the diameter of the vessel 12 itself. The tower 20 terminates with a removable cover plate 22 and has an outlet 24 which connects to the vapour handling system (not shown) for the processing of vapour 28 and the tower 20 also accommodates inlet valves 26 for liquid.

At the base of vessel 12, there is provided a discharge valve 30 which is used to discharge of finished product.

The shaft 14 is driven by a high-powered motor 32 capable of a speed ratio of approximately 100 rpm. The rotation of the shaft 14 is permitted by means of mechanical shaft seals 34,36 located within end caps 38,40 disposed at either end of the vessel 12. The mechanical shaft seals 34,36 have water flowing through them under pressure, so as to cool and lubricate the seal faces. The seals are protected by temperature, pressure and may also include flow level switches if desired.

The vessel 12 also has an additional powder inlet 42, extending vertically from the vessel, through which powdered constituents 44 can be inserted into the vessel 12 if required.

In use, the reactor 10 is used to produce chocolate crumb from the various constituents. Generally speaking, the milk, sugar and cocoa mass and/or liquor are added to the vessel via the inlet valve 26 and/or the powder inlet 42. The inlet used for a particular constituent will be dependent upon whether they are in a liquid or powder form 44 and in some instances - only the liquid inlet valve will be used. The constituents can be added at the same time, or added sequentially if desired. During addition, the motor 32 is used to rotate the shaft 14 and in doing so, the agitator blades 16 thoroughly mix the constituents together. The vessel 12 is substantially sealed during mixing as it is sealed at both ends via the end caps 38,40 and the shaft 14 freely rotates within the mechanical face seals 34,36.

During the mixing, the jackets 18 are heated with a hot fluid (such as water or steam) to a particular temperature so as to evaporate excess liquid from the mixture into vapour. The vapour forms in the tower 20 and the vapour 28 is removed via the outlet 24 for further processing by means of the vapour handling system (which will be described in greater detail below). The jackets 18 are subjected to different heating and cooling parameters which are dictated by the particular chocolate crumb protocol which is employed. After sugar crystallisation, the crumb is dried and is discharged via the discharge valve 30 for further processing/storage/shipment. To facilitate cleaning and servicing, the cover plate 22 on the tower is removable so as to allow entry to the interior of the vessel 12.

The Reactor 10 is an extremely effective mixer and the incorporation of ingredients is accomplished in a shorter time when compared to conventional apparatus which requires separate mixing vessels for evaporating excess liquid from the initial mixture. The tower 20 reduces the gas velocity and solids carry-over during the low-pressure high gas flow stage, occurring during crystallisation. The motor 32 is sized to cope with the power required at the peak of crystallisation. The shaft 14 speed can also be automatically reduced by the motor 32 if the drive rating is exceeded for a certain period of time.

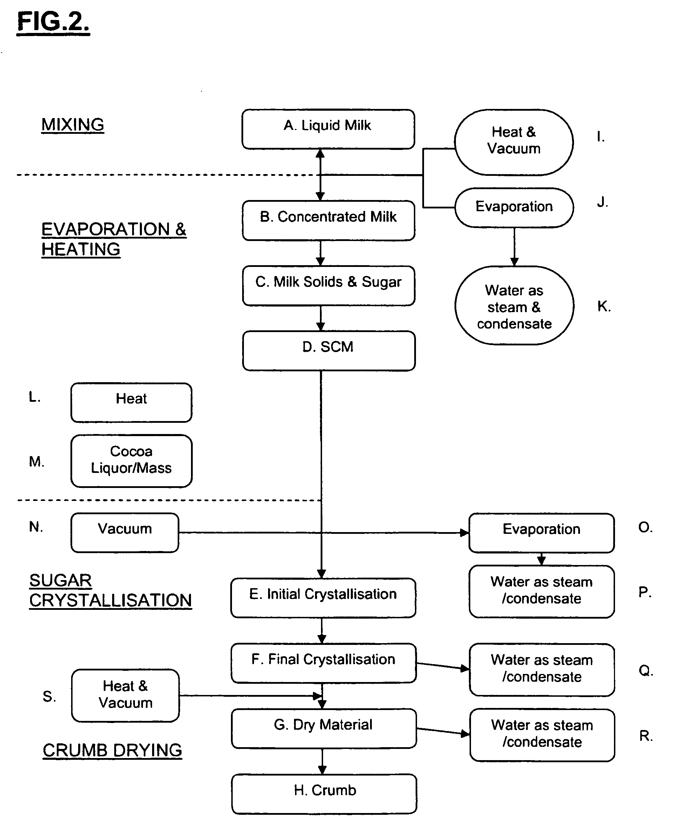

With reference to Figure 2, there is shown a schematic flow diagram and process chart illustrating the overall steps used in the process of the present invention. The key to the letters used in the Figure 2 is as follows:
A. Liquid Milk;
B. Concentrated Milk;
C. Milk Solids & Sugar;
D. SCM;
E. Initial Crystallisation;
F. Final Crystallisation;
G. Dry Material;
H. Crumb;
I. Heat & Vacuum
J. Evaporation;
K. Water as steam & condensate;
L. Heat;
M. Cocoa Liquor/Mass;
N. Vacuum;
O. Evaporation;
P. Water as steam/condensate;
Q. Water as steam/condensate;
R. Water as steam/condensate; and
S. Heat & Vacuum.
T.S. Total Solids

If liquid milk (A) is used, then it is first placed in the reactor and heated under vacuum (I) conditions, so that evaporation (J) of the excess liquid takes place. The excess liquid is expelled as water as steam and condensate (K). If concentrated milk (B) is used, then this is mixed with milk solids and sugar (C) so as to form SCM (D). The mixture is heated (L) and cocoa liquor/mass (M) is added. A vacuum (N) is applied during the heating so as to initiate crystallisation and excess liquid is subjected to evaporation (O) and disposed of as water as steam/condensation (P). Water as steam/condensate (Q) is released during the initial crystallisation (F). Finally, heat and vacuum (S) is applied to the mixture, so as to dry the material (G) - again resulting in the removal of water as steam/condensate (R), so as to produce the crumb (H) product.

The vapour handling system which effects the removal of the water as steam/condensate after evaporation relies upon a vacuum system. There are three stages of the Reactor Crumb process when the vacuum system is critical: (i) during low pressure evaporation of condensed milk; (ii) during the crystallisation stage at low pressure; and (iii) during the drying process.

The water evaporates through the tower 20 and passes through the following components: Condenser - The condenser is a large shell and tube heat exchanger mounted vertically with the process vapours on the tube side. Tubes are used to avoid blockage by any solids carried over from the Reactor. A large surface area is required to condense the very high vapour load at low pressure during and immediately after Crystallisation.

Condensate Receiver - Where applicable, condensate is collected in a vessel below the condenser. In liquid milk Reactors, measurement of the condensate weight that has been collected is used during the milk evaporation phase to identify the end of the evaporation process and to trigger the next stage of the process.

Vacuum Pump - The vacuum pump achieves a pressure 50- 90mbar. Charging of liquids (milk and liquor/mass) into the reactor 10 is generally through butterfly valves mounted on the tower 20. Powders (milk powder, sugar) are loaded through the main body of the machine.

Milk powder wetting is required if the milk constituent is at least partially formed from powder. Water is either added to milk powder, or after milk powder and sugar have been mixed together. This powder and water is mixed for a short time before heating starts.

Heating - Heating is controlled with steam pressure/temperature and vacuum. The application of vacuum reduces the boiling temperatures and the use of low pressure steam for heating will reduce surface temperatures and so help control burn-on. Typically the agitator is run at high speed during heating.

Evaporation - Evaporation is effected by heating the mixture to a temperature in the range of 90°C to 100°C under a lowered pressure of approximately 24kPa for approximately 30 minutes. The milk evaporation stage takes place at a reduced pressure to maximise heat transfer. Frothing and boil over of the milk into the condenser can occur if the pressure is reduced to below the boiling pressure at the current mass temperature. The process is most commonly monitored and controlled by measuring the condensate collected although boiling point evaluation can also be used.

Adjusting the % of Total Solids - It is desirable to modify the mixture so that the total solids present in the sweetened condensed milk is in the range of 75% to 90% of the mixture.

Heating and Liquor/mass addition - Once the correct solids of the sweetened condensed milk (SCM) are reached, the vacuum is released and the SCM is heated with steam in the jacket 18 to about 85°C for between 10 to 60 minutes. Cocoa Liquor/mass is then added and the mass is heated, cooled or temperature maintained to between 80°C and 110°C. At this time, the steam on the jacket 18 is turned off, the jacket vented and vacuum is pulled again to initiate Initial Crystallisation (F).

Crystallisation (F) - is when the mass of material in the reactor 10 is converted from a liquid, pasty solid to a substantially dry material by sucrose or sugar crystallisation. The process step before Crystallisation has to deliver a mass that has sufficient energy stored within it so that when a vacuum is applied, a sufficient amount of water will evaporate whereby crystallisation (E) can be initiated and develop through the mass. If there is insufficient energy (due to low temperature prior to Crystallisation or high moisture) the mass will not crystallise and break up and may either stall the drive or release fat. If there is too much stored energy, a very rapid rate of sucrose crystallisation will result generating very fine crystals along with a lot of carry over of dust into the condenser. Sugar crystallisation is effected by subjecting the mixture to a temperature of about 100°C, under a lowered pressure of approximately 15kPa for 10 to 20 minutes.

Drying - Immediately following Crystallisation, the crumb is at about 60°C and is extremely reactive, rapidly developing flavours due to the reaction of milk protein and lactose (Maillard Reaction). This is in addition to any flavour developed prior to Crystallisation when there is more moisture with cocoa liquor available. Drying is effected at a temperature in the range of 70°C to 80°C for about 25 minutes.

The pressure is initially kept low to evaporate some of the remaining moisture thus reducing the temperature of the mass during crystallisation. Evaporative cooling is far more effective than any other form of cooling because it removes heat from the reactive sites (where moisture, lactose and milk protein are concentrated as the sucrose crystallises).

Once the reactions have been "quenched", the option exists to either continue drying to achieve the final desired moisture content at low pressure or to allow the pressure to rise slightly, so as to stop evaporation and allow the flavour development reactions to continue.

Cooling - The crumb is then cooled to about 30°C for about 120 minutes.

Pasting (optional) - In some embodiments, fat is added directly to the material in the Reactor and a paste is discharged, whilst in other embodiments, the dry crumb is discharged for later mixing.

Discharge - Discharge from the Reactor is generally through a bottom mounted, discharge valve and is generally quite rapid.

### Example 1 - Liquid Milk

### Initial process:

The initial ingredients are loaded into the mixing vessel and the shaft rotated at a low speed. The milk and sugar are loaded into reactor and the shaft rotated at a pre-determined speed. The vacuum system is started and evaporation pressure is reduced. Steam and condensate valves are then opened.

### Evaporation and Heating:

The milk and sugar mix is evaporated to between 85 - 88% solids by heating the mixture to between about 85°C to 95°C under a lowered pressure of approximately 24kPa for 30 minutes. The end point is determined by the measurement of the weight of the condensate collected. The vacuum system is stopped so as to break the vacuum, and the condensate is drained into a collection vessel. The loading of molten cocoa liquor (~50°C) to liquor weighing vessel is initiated, so that the cocoa liquor is already in the liquor feed vessel above the Reactor. The reactor is heated further to a "liquor addition" temperature, which is typically between 95-105°C.

### Addition of Liquor:

The liquor from the weighing vessel is loaded into the reactor and heating is continued to "Vacuum On" temperature. The cocoa liquor is often West African or Asian with a fat content of between 50 to 56% and non-fat cocoa solids in the range of 40 to 48%.

### Vacuum ramp and Crystallisation:

At the vacuum on temperature, the steam and vent jackets are turned off. The motor speed is reduced to about 50% and the vacuum system is started with control valve fully open. The vacuum ramp is initiated at approximately 15kPa/min and the reactor heated, or cooled to about 100°C for 10 to 20 minutes. Evaporation starts and the crumb paste cools and thickens. The drive power is increased steadily and then more rapidly as the process continues. Crystallisation is initiated by the mixing action and the mass changes from a paste to a powder with a rapid evolution of vapour. At this point the power is reduced and a pressure "spike" occurs as the vapour evolution briefly overwhelms the condenser and affects the vacuum pump. The process then continues either via flavour development and drying or directly to drying.

### Final drying:

The pressure is adjusted to the drying set point and the crumb is heated to approximately 80°C for about 25 minutes. Heating is continued under low pressure (3.5-10 kPa) until drying is complete. The steam and vent jackets are then turned off and the vacuum and vent systems released and the condensate vessel drained.

### Cooling:

Cold water is introduced into the Reactor jacket for about 120 minutes so as to cool the crumb down to about 30°C.

### Fat addition:

If required, fat is added and mixed with the crumb.

### Discharge:

Lastly, the discharge and vent valves are opened and motor at low speed to assist discharge via the discharge valve.

### Example 2 - Powdered Milk

### Initial Process:

The reactor is started at low speed and powder milk and sugar loaded into the mixing vessel. The mix is allowed to dry and water is then loaded into the reactor and blended at low speed. The reactor is then run at a higher speed and the steam and condensate valves opened.

### Heating:

The milk/sugar/water paste is then heated to between 85°C to 95°C under a lowered pressure of about 24kPa for approximately 30 minutes to result in a mixture having between 85-88% solids. The loading of cocoa liquor to liquor weigh vessel is initiated and the reactor heated to the "liquor addition" temperature.

### Addition of Liquor:

The liquor from weighing vessel is loaded into the reactor and heating is continued to the "Vacuum On" temperature.

### Vacuum ramp and Crystallisation:

The steam and vent jackets are turned off and speed reduced to 50% at which point the motor has maximum torque. The vacuum system is started with the control valve fully open. The vacuum ramp at 15 kPa/min and the pressure is reduced steadily to the Crystallisation set point and the temperature of the reactor raised to 100°C for 10 to 20 minutes. Evaporation commences and the paste cools and thickens. The drive power increases steadily at first but more rapidly as the process continues. Crystallisation is then initiated by the mixing action and the mass changes from a paste to a powder along with a rapid evolution of vapour. The power is then reduced and evaporation is continued until the end point temperature is reached or drying time has been exceeded. Steam can be applied to obtain the final drying temperature. The process then continues either via flavour development and drying or directly to drying.

### Final drying:

Pressure is reduced and the crumb is heated to approximately 80°C for about 25 minutes. Heating is continued under low pressure until drying is complete. The steam and vent jackets are turned off and the vacuum and vent system released. The condensate vessel is then drained.

### Cooling:

Cold water is added to the jacket of the Reactor for about 120 minutes so as to cool the crumb down to about 30°C.

### Fat addition:

If required, the fat is added and mixed with crumb.

### Discharge:

The discharge and vent valves are opened and the crumb discharged through the discharge valve.

The foregoing embodiments are not intended to limit the scope of protection afforded by the claims, but rather to describe examples how the invention may be put into practice.

## Claims

1. A process for preparing chocolate crumb comprising:
a) providing a milk and sugar mixture or mixing together, milk and sugar so as to form a mixture;
b) evaporating liquid from the mixture;
c) adding cocoa mass/liquor to the mixture during and/or after step (a) and/or (b);
d) subjecting the mixture to conditions effective to bring about sugar crystallisation in the mixture;
e) drying the mixture at a temperature in the range of 50 to 95°C for 35 to 200 minutes so as to form chocolate crumb; and
f) cooling the chocolate crumb by subjecting it to a temperature which is between 29°C and the drying temperature for 20 to 1000 minutes.

2. A process as claimed in claim 1, wherein step (e) comprises drying the mixture at a temperature in the range of 60 to 95°C for 45 to 90 minutes and/or subjecting the mixture to a lowered pressure.

3. A process as claimed in claim 2, wherein the mixture in step (e) is subjected to a lower pressure than the chocolate crumb in step (f).

4. A process as claimed in any preceding claim, wherein the chocolate crumb has a moisture content in the range of 0.5 to 7%, preferably 0.5 to 2%, more preferably 0.8 to 1.3%.

5. A process as claimed in any preceding claim, wherein step (b) comprises subjecting the mixture to heat, and optionally a lowered pressure.

6. A process as claimed in any preceding claim, wherein the mixture is subjected to heat and/or a lowered pressure between steps (b) and (c) and/or between steps (c) and (d).

7. A process as claimed in any preceding claim, wherein the milk is formed from powdered milk and water.

8. A process as claimed in any preceding claim, wherein step (a) further comprises the addition of water.

9. A process as claimed in any one of claims 1 to 6, wherein the milk comprises liquid milk preferably concentrated liquid milk.

10. A process as claimed in any preceding claim, wherein the process further comprises adding milk solids prior to undertaking step (d).

11. A process as claimed in any preceding claim, wherein the process further comprises the step of adding a fat to the mixture before or during step (e) and/or (f).

12. A process as claimed in any preceding claim, wherein at least steps (a) to (d) are undertaken in a single reaction vessel.

13. A process as claimed in claim 12, wherein steps (a) to (f) are undertaken in a single reaction vessel.

14. A process as claimed in any preceding claim, wherein the process further comprises the step of:
g) forming the chocolate crumb into briquettes.

## Patentansprüche

1. Verfahren zum Herstellen von Schokoladenkrumen, umfassend:
a) Bereitstellen einer Milch- und Zuckermischung oder Zusammenmischen von Milch und Zucker, um eine Mischung zu erzeugen;
b) Verdampfen von Flüssigkeit aus der Mischung;
c) Hinzufügen von Kakaomasse/-liquor zu der Mischung während und/oder nach Schritt (a) und/oder (b);
d) Unterwerfen der Mischung Bedingungen, die wirksam in der Mischung Zuckerkristallisation zustande bringen;
e) Trocknen der Mischung bei einer Temperatur in dem Bereich von 50 bis 95°C für 35 bis 200 Minuten, um Schokoladenkrumen zu erzeugen; und
f) Kühlen der Schokoladenkrumen, indem sie einer Temperatur, welche zwischen 29°C und der Trocknungstemperatur ist, für 20 bis 1000 Minuten unterworfen werden.

2. Verfahren nach Anspruch 1, wobei Schritt (e) umfasst, die Mischung bei einer Temperatur in dem Bereich von 60 bis 95°C für 45 bis 90 Minuten zu trocknen und/oder die Mischung einem verminderten Druck zu unterwerfen.

3. Verfahren nach Anspruch 2, wobei die Mischung in Schritt (e) einem niedrigeren Druck unterworfen wird als die Schokoladenkrumen in Schritt (f).

4. Verfahren nach einem vorhergehenden Anspruch, wobei die Schokoladenkrumen einen Feuchtigkeitsgehalt in dem Bereich von 0,5 bis 7%, vorzugsweise 0,5 bis 2%, stärker bevorzugt 0,8 bis 1,3%, haben.

5. Verfahren nach einem vorhergehenden Anspruch, wobei Schritt (b) umfasst, die Mischung Hitze, und gegebenenfalls einem verminderten Druck, zu unterwerfen.

6. Verfahren nach einem vorhergehenden Anspruch, wobei die Mischung zwischen den Schritten (b) und (c) und/oder zwischen den Schritten (c) und (d) Hitze und/oder einem verminderten Druck unterworfen wird.

7. Verfahren nach einem vorhergehenden Anspruch, wobei die Milch aus Milchpulver und Wasser erzeugt wird.

8. Verfahren nach einem vorhergehenden Anspruch, wobei Schritt (a) weiterhin die Zugabe von Wasser umfasst.

9. Verfahren nach einem der Ansprüche 1 bis 6, wobei die Milch flüssige Milch, vorzugsweise konzentrierte flüssige Milch, umfasst.

10. Verfahren nach einem vorhergehenden Anspruch, wobei das Verfahren weiterhin umfasst, Milchtrockenmasse hinzuzufügen, bevor Schritt (d) unternommen wird.

11. Verfahren nach einem vorhergehenden Anspruch, wobei das Verfahren weiterhin den Schritt umfasst, vor oder während Schritt (e) und/oder (f), ein Fett zu der Mischung hinzuzufügen.

12. Verfahren nach einem vorhergehenden Anspruch, wobei zumindest die Schritte (a) bis (d) in einem einzigen Reaktionsbehälter unternommen werden.

13. Verfahren nach Anspruch 12, wobei die Schritte (a) bis (f) in einem einzigen Reaktionsbehälter unternommen werden.

14. Verfahren nach einem vorhergehenden Anspruch, wobei das Verfahren weiterhin den Schritt umfasst:
g) Formen der Schokoladenkrumen zu Presslingen.

## Revendications

1. Procédé de préparation de brisures de chocolat comprenant les étapes consistant à:
a) fournir un mélange de lait et de sucre, ou mélanger ensemble du lait et du sucre de façon à former un mélange;
b) procéder à l'évaporation de liquide à partir du mélange;
c) ajouter une pâte/liqueur de cacao au mélange pendant et/ou après les étapes (a) et/ou (b);
d) exposer le mélange à des conditions efficaces pour provoquer la cristallisation du sucre dans le mélange;
e) sécher le mélange à une température comprise entre 50 et 95°C pendant 35 à 200 minutes de façon à former des brisures de chocolat; et
f) refroidir les brisures de chocolat en les exposant à une température qui est comprise entre 29°C et la température de séchage pendant 20 à 1000 minutes.

2. Procédé selon la revendication 1, dans lequel l'étape (e) comprend le séchage du mélange à une température comprise entre 60 et 95°C pendant 45 à 90 minutes et/ou l'exposition du mélange à une pression réduite.

3. Procédé selon la revendication 2, dans lequel le mélange dans l'étape (e) est exposé à une pression plus basse que les brisures de chocolat dans l'étape (f).

4. Procédé selon l'une quelconque des revendications précédentes, dans lequel les brisures de chocolat ont un taux d'humidité compris entre 0,5 et 7%, de préférence entre 0,5 et 2%, plus préférentiellement entre 0,8 et 1,3%.

5. Procédé selon l'une quelconque des revendications précédentes, dans lequel l'étape (b) comprend l'exposition du mélange à la chaleur, et éventuellement à une pression réduite.

6. Procédé selon l'une quelconque des revendications précédentes, dans lequel le mélange est exposé à la chaleur et/ou à une pression réduite entre les étapes (b) et (c) et/ou entre les étapes (c) et (d).

7. Procédé selon l'une quelconque des revendications précédentes, dans lequel le lait est formé à partir de lait en poudre et d'eau.

8. Procédé selon l'une quelconque des revendications précédentes, dans lequel l'étape (a) comprend en outre l'ajout d'eau.

9. Procédé selon l'une quelconque des revendications 1 à 6, dans lequel le lait comprend du lait liquide, de préférence du lait liquide concentré.

10. Procédé selon l'une quelconque des revendications précédentes, lequel procédé comprend en outre l'ajout d'extraits secs laitiers avant la mise en oeuvre de l'étape (d).

11. Procédé selon l'une quelconque des revendications précédentes, lequel procédé comprend en outre l'étape consistant à ajouter une matière grasse au mélange avant ou pendant l'étape (e) et/ou (f).

12. Procédé selon l'une quelconque des revendications précédentes, dans lequel au moins les étapes (a) à (d) sont mises en oeuvre dans une seule et même cuve réactionnelle.

13. Procédé selon la revendication 12, dans lequel les étapes (a) à (f) sont mises en oeuvre dans une seule et même cuve réactionnelle.

14. Procédé selon l'une quelconque des revendications précédentes, lequel procédé comprend en outre l'étape consistant à:
g) façonner les brisures de chocolat en briquettes.
